# EUROPÄISCHE PATENTANMELDUNG

(11) **EP 2 495 425 A2**
(43) Veröffentlichungstag der Anmeldung: **05.09.2012**
(21) Anmeldenummer: 12154057.9
(22) Anmeldetag: 06.02.2012
(51) Int. Cl.: F02K 3/06, B64D 27/26

(54) **Strahltriebwerksvorrichtung mit einem Nebenstromkanal**

(30) Priorität: 04.03.2011 DE 102011013076
(71) Anmelder: Rolls-Royce Deutschland Ltd & Co KG, 15827 Blankenfelde-Mahlow (DE)
(72) Erfinder: Clemen, Carsten, 15749 Mittenwalde (DE)

(57) **Zusammenfassung**

Es wird eine Strahltriebwerksvorrichtung (1) mit einem Nebenstromkanal (2), der von einer inneren Wandung (3) und einer äußeren Wandung (4) begrenzt ist und in dem ein Fluidstrom (10) führbar ist, beschrieben. Zwischen der inneren Wandung (3) und der äußeren Wandung (4) des Nebenstromkanals (2) ist eine Stützeinrichtung (16) vorgesehen, die einenends mit der inneren Wandung (3) und anderenends mit der äußeren Wandung (4) verbundene strebenartige Stützelemente (17) umfasst. Mittellängsebenen (21) der Stützelemente (17) schließen in der inneren Wandung (3) zugewandten Bereichen (B) der Stützelemente (17) mit einer Triebwerksachse (6) einen positiven spitzen Winkel (17G) und in der äußeren Wandung (4) zugewandten Bereichen (A) der Stützelemente (17) mit der Triebwerksachse (6) einen negativen spitzen Winkel (17H) ein. Strömungsquerschnitte vergrößern sich jeweils im Bereich zwischen jeweils einen spitzen Winkel mit den Wandungen (3, 4) einschließenden Seitenflächen (17C, 17D) der Stützelemente (17) ausgehend von der Fluidströmung (10) zugewandten Bereichen (17A bis 20A) in Richtung zu der Fluidströmung (10) abgewandten Bereichen (17B) der Stützelemente (17).

## Beschreibung

Die Erfindung betrifft eine Strahltriebswerksvorrichtung mit einem Nebenstromkanal gemäß der im Oberbegriff des Patentanspruches 1 näher definierten Art.

Aus der US 2006/0038066 A1 ist eine Strahltriebwerksvorrichtung mit einem Nebenstromkanal bekannt, in dem ein Fluidstrom führbar ist. Der Nebenstromkanal ist von einer inneren Wandung und einer äußeren Wandung begrenzt, wobei zwischen der inneren Wandung und der äußeren Wandung des Nebenstromkanals eine Stützeinrichtung vorgesehen ist, die einenends mit der inneren Wandung und anderenends mit der äußeren Wandung verbundene strebenartige Stützelemente umfasst. Die Stützelemente schließen jeweils zwischen einer zwischen einem in Bezug auf eine Richtung des Fluidstromes im Nebenstromkanal zugewandten Bereich und einem in Bezug auf die Richtung des Fluidstromes abgewandten Bereich eines Stützelementes verlaufenden ersten Seitenfläche und der äußeren Wandung und zwischen einer zwischen dem der Fluidströmung im Nebenstromkanal zugewandten Bereich und dem der Fluidströmung abgewandten Bereich eines Stützelementes verlaufenden zweiten Seitenfläche und der inneren Wandung einen spitzen Winkel ein. Des Weiteren sind die Stützelemente jeweils mit einer in Bezug auf deren Mittellängsebene entlang der Mittellängsebene definierten Dickenverteilung ausgeführt.

Die Stützelemente sind in Bezug auf die Strömungsrichtung des Fluidstromes im Nebenstromkanal im hinteren Teil des Nebenstromkanals zur Ableitung von im Bereich eines Triebwerkskerns wirkenden Triebwerkslasten in Richtung der äußeren Wandung vorgesehen und jeweils paarweise in einer eine A-Anordnung bildenden Art und Weise mit der inneren Wandung und der äußeren Wandung verbunden und stehen im Nebenstromkanal mit der Kanalhöhe.

Aufgrund der gegenüber der Kanalhöhe angestellten Anordnung der Stützelemente im Nebenstromkanal wird ein für den im Nebenstromkanal strömenden Fluidstrom zur Verfügung stehender Strömungsquerschnitt insbesondere in den Anbindungsbereichen der Stützelemente an der inneren Wandung und an der äußeren Wandung besonders im Bereich der jeweils von den Stützelementen und den Wandungen eingeschlossenen spitzen Winkeln derart eingeschränkt, dass im Bereich der verkleinerten Strömungsquerschnitte ein ungleichmäßiges Strömungsfeld verursacht wird und die Stützelemente nicht in gewünschter Art und Weise symmetrisch umströmt werden. Aus dem ungleichmäßigen Strömungsfeld um die Stützelemente herum resultieren im Vergleich zu einer symmetrischen Umströmung der Stützelemente unerwünscht hohe Verluste, die einen Triebwerkstreibstoffverbrauch vergrößern.

Der vorliegenden Erfindung liegt daher die Aufgabe zugrunde, eine Strahltriebwerksvorrichtung mit einem Nebenstromkanal und mit zwischen einer inneren Wandung und einer äußeren Wandung des Nebenstromkanals vorgesehenen Stützelementen zur Verfügung zu stellen, deren Triebwerkstreibstoffverbrauch im Vergleich zu aus dem Stand der Technik bekannten Strahltriebwerksvorrichtungen reduziert ist.

Erfindungsgemäß wird diese Aufgabe mit einer Strahltriebwerksvorrichtung mit den Merkmalen des Patentanspruches 1 gelöst.

Bei der erfindungsgemäßen Strahltriebwerksvorrichtung mit einem Nebenstromkanal, der von einer inneren Wandung und von einer äußeren Wandung begrenzt ist und in dem ein Fluidstrom führbar ist, ist zwischen der inneren Wandung und der äußeren Wandung des Nebenstromkanals eine Stützeinrichtung vorgesehen, die einenends mit der inneren Wandung und anderenends mit der äußeren Wandung verbundene strebenartige Stützelemente umfasst. Die Stützelemente schließen jeweils zwischen einer zwischen einem in Bezug auf eine Richtung des Fluidstromes im Nebenstromkanal zugewandten Bereich und einem in Bezug auf die Richtung des Fluidstromes abgewandten Bereich eines Stützelementes verlaufenden ersten Seitenfläche und der äußeren Wandung und zwischen einer zwischen dem der Fluidströmung im Nebenstromkanal zugewandten Bereich und dem der Fluidströmung abgewandten Bereich eines Stützelementes verlaufenden zweiten Seitenfläche und der inneren Wandung einen spitzen Winkel ein. Zusätzlich sind die Stützelemente jeweils mit einer in Bezug auf deren Mittellängsebene entlang der Mittellängsebene definierten Dickenverteilung ausgeführt.

Erfindungsgemäß schließen die Mittellängsebenen der Stützelemente in der inneren Wandung zugewandten Bereichen der Stützelemente mit einer Triebwerksachse einen positiven spitzen Winkel und in der äußeren Wandung zugewandten Bereichen der Stützelemente mit der Triebwerksachse einen negativen spitzen Winkel ein, womit sich Strömungsquerschnitte jeweils im Bereich zwischen den jeweils einen spitzen Winkel mit den Wandungen einschließenden Seitenflächen ausgehend von den der Fluidströmung zugewandten Bereichen in Richtung der zu der Fluidströmung abgewandten Bereichen der Stützelemente vergrößern.

Damit wird auf konstruktiv einfache Art und Weise ein ungleichmäßiges Strömungsfeld besonders in den Anbindungsbereichen nahen Bereichen der Stützelemente an der inneren Wandung und der äußeren Wandung und ein daraus resultierender Gesamtdruckverlust im Bereich der Stützelemente im Vergleich zu aus dem Stand der Technik bekannten Strahltriebwerksvorrichtungen auf ein Minimum reduziert und die erfindungsgemäße Strahltriebwerksvorrichtung ist mit geringem Triebwerkstreibstoffverbrauch betreibbar.

Die Stützelemente sind hierfür in definierten Bereichen, d. h. zumindest in den den Anbindungsbereichen zwischen den Stützelementen und der inneren Wandung und der äußeren Wandung des Nebenstromkanals zugewandten Bereichen mit einem gestaffelten und vorzugsweise mit einem schraubenartig Verdrillten Profil ausgeführt, mittels welchen im Vergleich zu aus dem Stand der Technik bekannten Strahltriebwerksvorrichtungen ein niedriger Gesamtdruckverlust erzielt wird.

Bei einer vorteilhaften Ausführungsform der erfindungsgemäßen Strahltriebwerksvorrichtung variieren die Beträge der spitzen Winkel zwischen der Mittellängsebene eines Stützelementes und der Triebwerksachse in Abhängigkeit von Beträgen der spitzen Winkel zwischen den Seitenflächen des Stützelementes und den Wandungen des Nebenstromkanals. Damit wird gewährleistet, dass der einen höheren Triebwerkstreibstoffverbrauch erzeugende und aus einer Querschnittsreduzierung im Bereich der Anbindungsbereiche der Stützelemente mit der inneren Wandung und der äußeren Wandung verursachende Gesamtdruckverlust in Abhängigkeit des jeweils vorliegenden Anwendungsfalles auf ein Minimum reduziert wird.

Steigen die Beträge der spitzen Winkel zwischen der Mittellängsebene eines Stützelementes und der Triebwerksachse mit sinkenden Beträgen der spitzen Winkel zwischen den Seitenflächen der Stützelemente und den Wandungen an, wird der Gesamtdruckverlust durch eine gleichmäßige Umströmung der Stützelemente in gewünschtem Umfang anwendungsfallabhängig im Vergleich zu aus dem Stand der Technik bekannten Strahltriebwerksvorrichtungen reduziert.

Sind die Mittellängsebenen der Stützelemente jeweils in einem mittleren Bereich der Stützelemente zwischen den den Wandungen zugewandten Bereichen parallel zur Triebwerksachse ausgerichtet, stellt sich jeweils in den mittleren Bereichen der Stützelemente ein einen geringen Gesamtdruckverlust gewährleistendes gleichmäßiges Strömungsfeld um die Stützelemente herum mit geringem konstruktiven Aufwand ein.

Der durch die Anordnung der Stützelemente im Nebenstromkanal verursachte Gesamtdruckverlust ist in gewünschtem Umfang reduzierbar, wenn die Beträge der spitzen Winkel zwischen den Mittellängsebenen der Stützelemente und der Triebwerksachse in den Verbindungsbereichen mit den Wandungen ihre Maxima aufweisen.

Des Weiteren wird ein im Vergleich zu aus dem Stand der Technik bekannten Strahltriebwerksvorrichtungen auftretender Gesamtdruckverlust in gewünschtem Umfang reduziert, wenn die Beträge der spitzen Winkel zwischen den Mittellängsebenen der Stützelemente und der Triebwerksachse ausgehend von den Verbindungsbereichen mit den Wandungen in Richtung der mittleren Bereiche stetig abnehmen, da dann ein zur Erzielung eines gleichmäßigen Strömungsfeldes um die Stützelemente herum günstiger Übergang zwischen den verdrillt ausgeführten und den Wandungen zugewandten Bereichen der Stützelemente und dem im Wesentlichen nicht verdrillt ausgeführten mittleren Bereichen geschaffen wird.

Bei einer vorteilhaften Ausführungsform der erfindungsgemäßen Strahltriebwerksvorrichtung weisen die Beträge der spitzen Winkel zwischen den Mittellängsebenen der Stützelemente und der Triebwerksachse ausgehend von den Verbindungsbereichen mit der inneren Wandung in Richtung der mittleren Bereiche Werte zwischen maximal 10° und 0° auf, um den Gesamtdruckverlust in gewünschtem Umfang zu reduzieren.

Weisen die Beträge der spitzen Winkel zwischen den Mittellängsebenen der Stützelemente und der Triebswerksachse ausgehend von den Verbindungsbereichen mit der äußeren Wandung in Richtung der mittleren Bereiche Werte zwischen maximal 15° und 0° auf, ist der Gesamtdruckverlust ebenfalls in gewünschtem Umfang minimierbar.

Der durch die Umströmung der Stützelemente auftretende Gesamtdruckverlust ist bei einer weiteren vorteilhaften Ausführungsform der erfindungsgemäßen Strahltriebwerksvorrichtung dadurch reduziert, dass sich die den Wandungen zugewandten Bereiche der Stützelemente, deren Mittellängsebenen mit der Triebwerksachse einen spitzen Winkel einschließen, jeweils ausgehend von den Anbindungsbereichen der Stützelemente an den Wandungen mindestens bis auf 10% und maximal bis auf 30% einer Kanalhöhe des Nebenstromkanals erstrecken.

Bei einer weiteren vorteilhaften Ausführungsform der erfindungsgemäßen Strahltriebwerksvorrichtung sind jeweils zwei Stützelemente in einer eine A-Anordnung bildenden Art und Weise mit der inneren Wandung und der äußeren Wandung verbunden, um im Bereich der inneren Wandung wirkende Triebwerkslasten mit hohem Wirkungsgrad im Bereich der äußeren Wandung abstützen zu können, wobei die erfindungsgemäße Verdrillung der Stützelemente in den den Wandungen zugewandten Bereichen ebenfalls zwischen den eine A-Anordnung bildenden Stützelementen ein gleichmäßiges Strömungsfeld schafft, da sich die beiden jeweils zueinander geneigt angeordneten Stützelemente gegeneinander nicht mehr aerodynamisch beeinflussen und in gewünschtem Umfang gleichmäßig umströmt werden.

Bei einer vorteilhaften Weiterbildung der erfindungsgemäßen Strahltriebwerksvorrichtung sind die Beträge der spitzen Winkel zwischen den Seitenflächen der Stützelemente und der inneren Wandung und die Beträge der spitzen Winkel zwischen den Seitenflächen der Stützelemente und der äußeren Wandung jeweils gleich groß, womit die Stützelemente auf kostengünstige Art und Weise mittels gleich ablaufender Fertigungsprozesse herstellbar sind.

Die Stützelemente sind bei einer weiteren vorteilhaften Ausführungsform, bei der die Beträge der spitzen Winkel zwischen den Mittellängsebenen der Stützelemente und der Triebwerksachse gleich groß sind, ebenfalls kostengünstig herstellbar.

Weisen die Stützelemente jeweils in einer senkrecht zur Mittellängsebene stehenden Querschnittsebene einen elliptischen Querschnitt auf, ist der durch die Anordnung der Stützelemente im Nebenstromkanal auftretende Gesamtdruckverlust aufgrund der strömungstechnisch günstigen Querschnittsform der Stützelemente ebenfalls auf ein Minimum reduzierbar.

Sowohl die in den Patentansprüchen angegebenen Merkmale als auch die in den nachfolgenden Ausführungsbeispielen der erfindungsgemäßen Strahltriebwerksvorrichtung angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Ausführungsformen der erfindungsgemäßen Strahltriebwerksvorrichtung ergeben sich aus den Patentansprüchen und den nachfolgend unter Bezugnahme auf Zeichnung prinzipmäßig beschriebenen Ausführungsbeispielen.

Es zeigt:
- Fig. 1: eine stark schematisierte Längsschnittansicht zweier verschiedener Ausführungsformen der erfindungsgemäßen Strahltriebwerksvorrichtung, die ein Turbofan-Triebwerk mit Nebenstromkanal, Kernstrom und einem Mischer für die Vermischung des Kernstroms mit dem Nebenstrom bzw. ohne eine Vermischung von Kern- und Nebenstrom darstellen;
- Fig. 2: eine Querschnittansicht der Strahltriebwerksvorrichtung gemäß Fig. 1 aus einer in Fig. 1 näher gezeigten Ansicht II;
- Fig. 3: eine vereinfachte dreidimensionale Einzelansicht eines Stützelementes der Strahltriebwerksvorrichtung gemäß Fig. 1;
- Fig. 4: einen Verlauf eines spitzen Winkels zwischen einer Mittellängsebene des Stützelementes gemäß Fig. 3 über einer Kanalhöhe des Nebenstromkanals der Strahltriebwerksvorrichtung gemäß Fig. 1; und
- Fig. 5: eine Querschnittansicht eines der Stützelemente gemäß Fig. 2 in einem Verbindungsbereich des Stützelementes mit einer inneren Wandung des Nebenstromkanals der Strahltriebwerksvorrichtung gemäß Fig. 1.

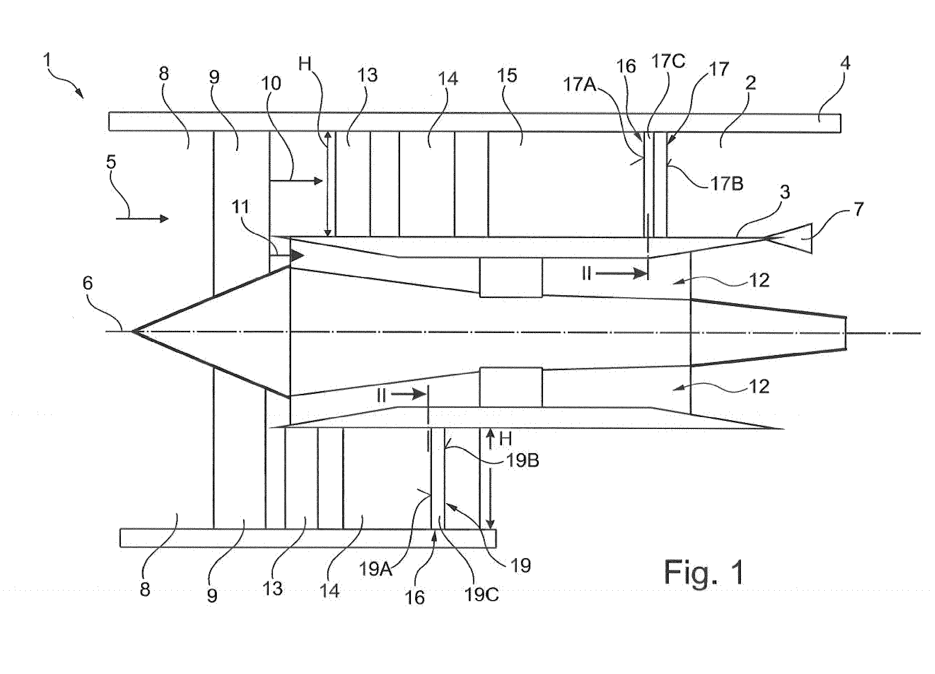

Fig. 1 zeigt eine Längsschnittansicht zwei verschiedener Ausführungsformen einer ein Turbofan-Triebwerk darstellenden Strahltriebwerksvorrichtung 1 mit einem Nebenstromkanal 2, der von einer inneren Wandung 3 und einer äußeren Wandung 4 begrenzt ist und in dem ein Fluidstrom 5 führbar ist. Oberhalb einer Triebwerksachse 6, die gleichzeitig eine Symmetrieachse der Strahltriebwerksvorrichtung 1 darstellt, ist die erste Ausführungsform der Strahltriebwerksvorrichtung 1 gezeigt, die im Vergleich zu der unterhalb der Triebwerksachse 6 in Fig. 1 gezeigten zweiten Ausführungsform der Strahltriebwerksvorrichtung 1 zusätzlich mit einem Mischer 7 für die Vermischung eines innerhalb der inneren Wandung 3 geführten Kernstroms 11 mit dem im Nebenstromkanal 2 geführten Fluidstrom 10 bzw. im Nebenstrom zur Ausbildung eines gemischten Jets ausgeführt ist.

Beide Ausführungen der Strahltriebwerksvorrichtung 1 sind mit einem Einlaufbereich 8 ausgebildet, an den sich stromab ein Bläser 9 in an sich bekannter Art und Weise anschließt. Wiederum stromab des Bläsers 9 teilt sich der Fluidstrom 5 in den Nebenstrom 10 und den Kernstrom 11 auf, wobei der Nebenstrom 10 durch den Nebenstromkanal 2 und der Kernstrom 11 in einen Triebswerkskern 12 strömt, der wiederum in an sich bekannter und in der Zeichnung in nicht näher dargestellter Art und Weise mit einer Verdichtereinrichtung, einer Brennkammer und einer Turbine ausgeführt ist. Die innere Wandung 3 stellt vorliegend ein Gehäuse des Triebwerkskernes 12 dar, während die äußere Wandung 4 die äußere Triebwerksverkleidung bildet.

Im Nebenstromkanal 2 sind wiederum stromab des Bläsers 9 mehrere Bläsernachleitschaufeln 13 angeordnet, über die ein Drall in der Strömung des Nebenstroms 10 reduzierbar bzw. entfernbar ist. Zusätzlich sind stromab der Bläsernachleitschaufeln 13 Stützen 14 vorgesehen, die die innere Wandung 3 und die äußere Wandung 4 gegeneinander abstützen. Zusätzlich zu den Stützen 14 weist die obere Ausführungsform der Strahltriebwerksvorrichtung 1 stromab der Stützen 14 sogenannte Bifurkationen 15 auf, durch die Leitungen zur Versorgung der Strahltriebwerksvorrichtung 1 oder einer Flugzeugzelle eines mit der Strahltriebwerksvorrichtung 1 ausgeführten Flugzeuges geführt sind.

In Abhängigkeit des jeweils vorliegenden Anwendungsfalles besteht auch die Möglichkeit, dass die Bifurkationen 15 in der gleichen Querschnittsebene wie die Stützen 14 angeordnet sind.

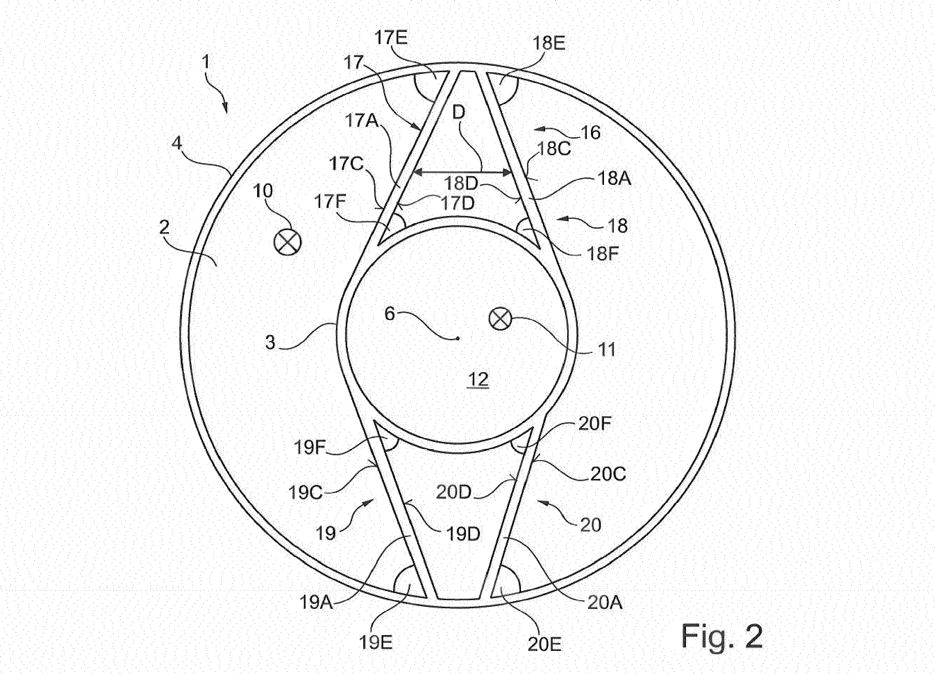

Wiederum stromab der Stützen 14 oder der Bifurkationen 15 ist im hinteren Teil des Nebenstromkanals 2 bei beiden Ausführungsformen der Strahltriebwerksvorrichtung 1 jeweils eine Stützeinrichtung 16 vorgesehen, die in Fig. 2 näher dargestellte und einenends mit der inneren Wandung 3 und anderenends mit der äußeren Wandung 4 verbundene strebenartige Stützelemente 17 bis 20 umfasst. Die Stützelemente 17 bis 20 schließen jeweils zwischen einer zwischen einem in Bezug auf eine Richtung des Fluidstromes 10 im Nebenstromkanal 2 zugewandten Bereich 17A bis 20A und einem in Bezug auf die Richtung des Fluidstromes 10 abgewandten Bereiches 17B, 19B der Stützelemente 17 bis 20 verlaufenden ersten Seitenfläche 17C bis 20C und der äußeren Wandung 4 und jeweils zwischen einer zwischen dem der Fluidströmung 10 im Nebenstromkanal 2 zugewandten Bereich 17A bis 20A und dem der Fluidströmung 10 abgewandten Bereich 17B, 19B der Stützelemente 17 bis 20 verlaufenden zweiten Seitenfläche 17D bis 20D und der inneren Wandung 3 einen spitzen Winkel 17E bis 20E bzw. 17F bis 20F ein. Jeweils zwei der Stützelemente 17 und 18 bzw. 19 und 20 sind in einer eine A-Anordnung bildenden Art und Weise mit der inneren Wandung 3 und der äußeren Wandung 4 in der in Fig. 2 näher gezeigten Art und Weise verbunden und bilden sogenannte A-Frames der Stützeinrichtung 16.

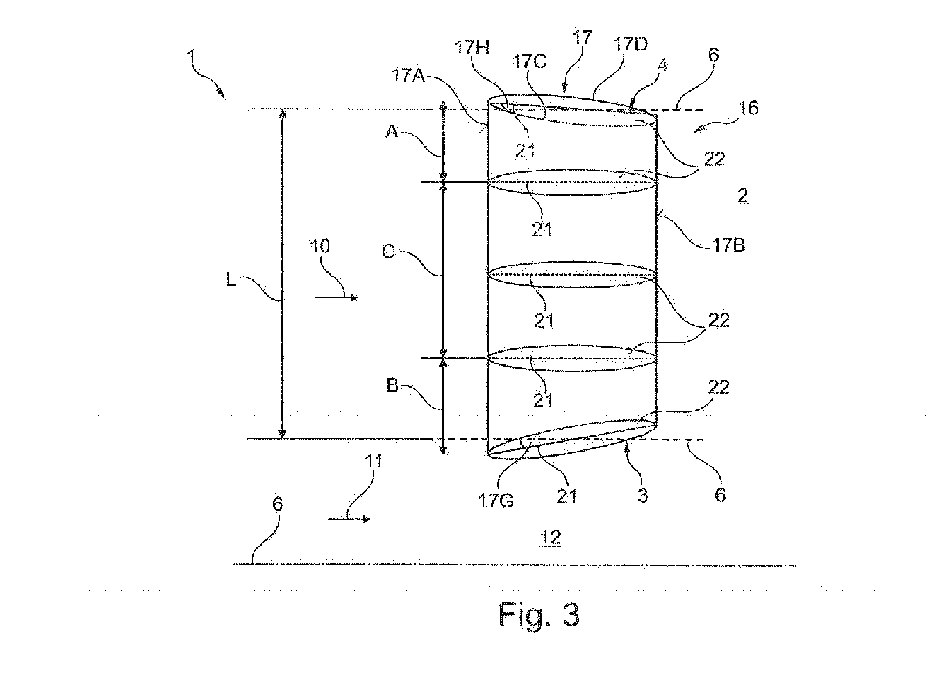

Die A-Frames darstellenden Stützelemente 17 und 18 bzw. 19 und 20 stehen im Nebenstromkanal 2 mit einer Kanalhöhe H, um im Bereich des Triebwerkskernes 12 wirkende Triebwerkslasten nach außen in Richtung der äußeren Wandung 4 leiten zu können. Die jeweils paarweise einander zugeordneten Stützelemente 17 und 18 bzw. 19 und 20 sind in Abhängigkeit des jeweils vorliegenden Anwendungsfalles mit definiertem spitzem Winkel 17F, 18F bzw. 19F, 20F und mit einem in Umfangsrichtung definierten Abstand D zueinander angeordnet. Des Weiteren sind die Stützelemente 17 bis 20 mit aerodynamisch geformten Querschnittsprofilen ausgeführt, die radial übereinander gestapelt die Form des A-Frames bzw. der Stützeinrichtung 16 bestimmen. Dabei weisen die Stützelemente 17 bis 20 der Stützeinrichtung 16 keine Wölbung gegenüber der Triebwerksachse 6 auf und sind gegenüber einer Mittellängsebene 21 in der in Fig. 3 näher gezeigten Art und Weise mit einer die definierte Profilierung ausbildenden Dickenverteilung ausgebildet, wobei die Stützelemente 17 bis 20 jeweils in einer senkrecht zur Mittellängsebene 21 stehenden Querschnittebene 22 ein elliptisches und somit aerodynamisch optimiertes Querschnittsprofil aufweisen.

Aufgrund der über der Kanalhöhe H des Nebenstromkanals 2 schrägen Anordnung der Stützelemente 17 bis 20 im Nebenstromkanal 2 ist ein Strömungsquerschnitt für den Nebenstrom 10 insbesondere in den Verbindungsbereichen der Stützelemente 17 bis 20 mit der inneren Wandung 3 und mit der äußeren Wandung 4 besonders in den jeweils die spitzen Winkel 17E bis 20E und 17F bis 20F mit den Wandungen 3 und 4 einschließenden Bereiche der Stützelemente 17 bis 20 gegenüber dem stromauf der Stützelemente 17 bis 20 vorliegenden Strömungsquerschnitt des Nebenstromkanals 2 eingeschränkt. Damit sich um die Stützelemente 17 bis 20 herum ein gleichmäßiges Strömungsfeld einstellt, schließen die Mittellängsebenen 21 der Stützelemente 17 bis 20 mit der Triebwerksachse 6 in den der inneren Wandung 3 zugewandten Bereichen B einen positiven spitzen Winkel 17G und in der äußeren Wandung 4 zugewandten Bereichen A der Stützelemente 17 bis 20 mit der Triebwerksachse 6 einen negativen spitzen Winkel 17H ein. Damit vergrößern sich die Strömungsquerschnitte jeweils im Bereich zwischen den jeweils einen spitzen Winkel 17E bis 20E und 17F bis 20F mit den Wandungen 3 und 4 einschließenden Seitenflächen 17A bis 20A bzw. 17B bis 20B ausgehend von den der Fluidströmung 10 zugewandten Bereichen 17A bis 20A in Richtung der zu der Fluidströmung 10 abgewandten Bereiche 17B, 19B der Stützelemente 17 bis 20.

Des Weiteren sind die Mittellängsebenen 21 der Stützelemente 17 bis 20 jeweils in einem zwischen den den Wandungen 3 und 4 zugewandten Bereichen A und B angeordneten mittleren Bereich C der Stützelemente 17 bis 20 parallel zur Triebwerksachse 6 ausgerichtet. Damit sind beispielsweise die Stützelemente 17, 18 in den Wandungen 3 und 4 zugewandten Bereichen A und B mit jeweils einer gegenläufigen Verdrillung ausgeführt und in den mittleren Bereichen C in Bezug auf die Triebwerksachse 6 bzw. die Fluidströmung 10 im Nebenstromkanal 2 ohne Verdrillung ausgebildet, um über die gesamte Länge L der Stützelemente 17 bis 20 um die Stützelemente 17 bis 20 herum ein gleichmäßiges und einen Gesamtdruckverlust reduzierendes Strömungsfeld zu erzeugen.

Über die in Bezug auf die gesamte axiale Länge L der Stützelemente 17 bis 20 partielle Verdrillung der Stützelemente 17 bis 20 werden die Strömungsquerschnitte zwischen den Stützelementen 17 bis 20 und den Wandungen 3 und 4 auf konstruktiv einfache Art und Weise im Bereich der spitzen Winkel 17E bis 20E und 17F bis 20F im Vergleich zu aus dem Stand der Technik bekannten Strahltriebwerksvorrichtungen, die ebenfalls mit einer Stützeinrichtung 16 bzw. mit sogenannten A-Frames ausgeführt sind, in gewünschtem Umfang vergrößert, um das gleichmäßige Strömungsfeld um die Stützelemente 17 bis 20 herum erzeugen zu können.

Dabei ist die Verdrillung der jeweils einander zugeordneten Stützelemente 17 und 18 bzw. 19 und 20 in den der äußeren Wandung 4 zugewandten Bereichen A derart, dass die Strömungsquerschnitte zwischen den Stützelementen 17 und 18 bzw. 19 und 20 entlang der Strömungsrichtung 10 im Nebenstromkanal 2 von den Bereichen A der Stützelemente 17 und 18 bzw. 19 und 20 verringert wird und die im Bereich der spitzen Winkel 17E und 18E bzw. 19E und 20E von den Stützelementen 17 und 18 bzw. 19 und 20 und der äußeren Wandung 4 begrenzten Strömungsquerschnitte vergrößert werden.

Gleichzeitig ist die Verdrillung der Stützelemente 17 und 18 bzw. 19 und 20 in den der inneren Wandung 3 zugewandten Bereichen B derart, dass sich die von den Bereichen B der Stützelemente 17 und 18 bzw. 19 und 20 und der inneren Wandung 3 begrenzten Strömungsquerschnitte im Bereich der spitzen Winkel 17F und 18F bzw. 19F und 20F in Strömungsrichtung 10 im Nebenstromkanal 2 vergrößern, während sich die von den Seitenflächen 17C und 18C bzw. 19C und 20C und den Wandungen 3 und 4 begrenzten Strömungsquerschnitte durch die Verdrillung der Bereiche B verkleinern.

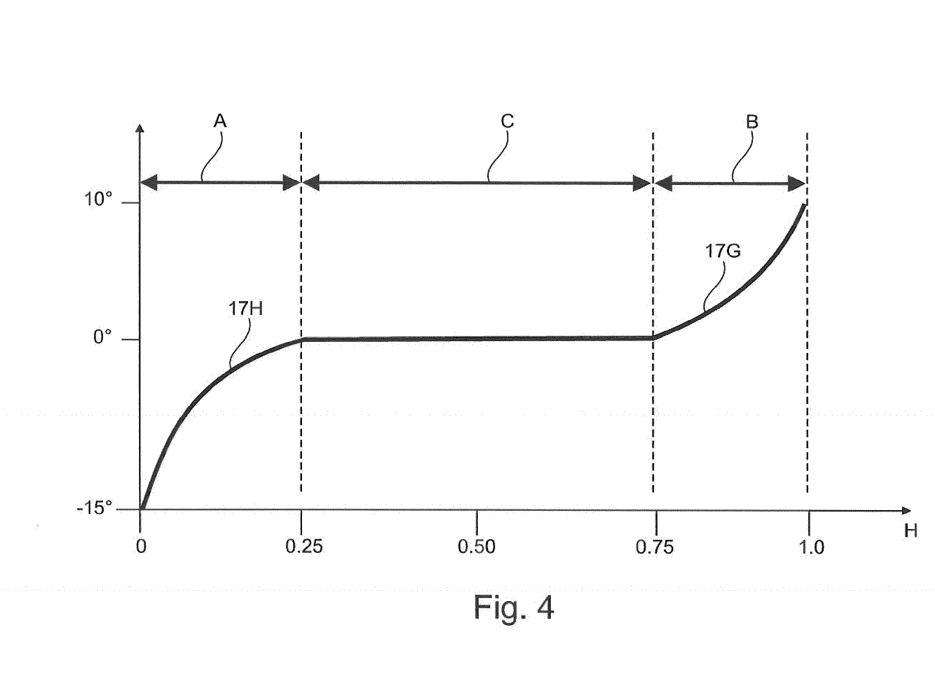

In Abhängigkeit des jeweils vorliegenden Anwendungsfalles erstrecken sich die Bereiche A und B der Stützelemente 17 bis 20 jeweils ausgehend von der Wandung 4 oder 3 mindestens bis auf 10% und maximal bis auf 30% der Kanalhöhe H des Nebenstromkanals 2 in Richtung der Wandung 3 oder 4. Die Beträge der spitzen Winkel 17G und 17H zwischen den Mittellängsebenen 21 der Stützelemente 17 bis 20 und der Triebwerksachse 6 weisen in den Verbindungsbereichen mit den Wandungen 3 und 4 in der in Fig. 4 dargestellten Art und Weise jeweils ihre Maxima auf. Zusätzlich nehmen die Beträge der spitzen Winkel 17G und 17H zwischen den Mittellängsebenen 21 der Stützelemente 17 bis 20 und der Triebwerksachse 6 ausgehend von den Verbindungsbereichen mit den Wandungen 3 und 4 in Richtung der mittleren Bereiche C stetig ab.

Dabei ist es zur Erzeugung eines gleichmäßigen Strömungsfeldes um die Stützelemente 17 bis 20 herum vorgesehen, dass die Beträge der spitzen Winkel 17G in den Bereichen B zwischen den Mittellängsebenen 21 der Stützelemente 17 bis 20 und der Triebwerksachse 6 ausgehend von den Verbindungsbereichen mit der inneren Wandung 3 in Richtung der mittleren Bereiche C Werte zwischen maximal 10° und 0° aufweisen, während die Beträge der spitzen Winkel 17H in den Bereichen A zwischen den Mittellängsebenen 21 der Stützelemente 17 bis 20 der Triebwerksachse 6 ausgehend von den Verbindungsbereichen mit der äußeren Wandung 4 in Richtung der mittleren Bereiche C Werte zwischen maximal 15° und 0° annehmen. Zusätzlich ist es vorgesehen, dass die Beträge der spitzen Winkel 17G und 17H zwischen den Mittellängsebenen 21 der Stützelemente 17 bis 20 und der Triebwerksachse 6 und somit die Verdrillungsgrade in den Bereichen A und B über dem Verlauf der Bereiche A und B jeweils gleich groß sind.

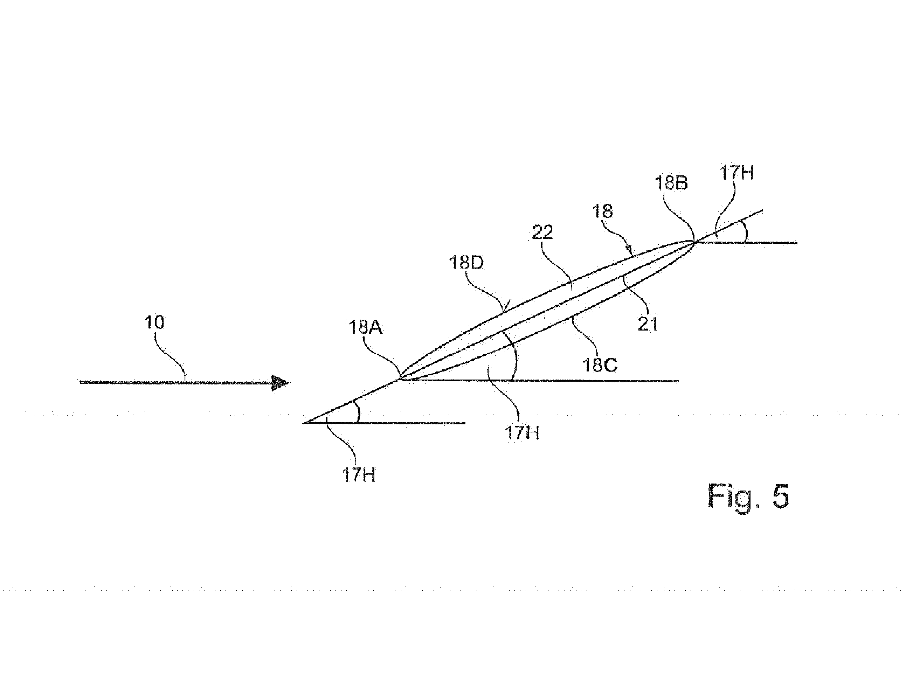

Fig. 5 zeigt eine vereinfachte Draufsicht auf das Stützelement 18 und die gegenüber der Triebwerksachse 6 vorgesehene maximale Verdrillung des Stützelementes 18 um den spitzen Winkel 17H im Verbindungsbereich des Stützelementes 18 mit der äußeren Wandung 4. Durch die in Fig. 5 dargestellte Staffelung des Stützelementes 18, die bei allen Stützelementen 17 bis 20 betragsmäßig im gleichen Umfang vorgesehen ist, liegt für die Fluidströmung 10 im Nebenstromkanal 2 im Bereich der Stützelemente 17 bis 20 jeweils ein definierter Eintrittswinkel 17H und ein dazu identischer Austrittswinkel 17H vor. Das bedeutet, dass die in den Bereichen A und B jeweils vorliegende Staffelung der Stützelemente 17 bis 20 durch einen gegenüber der Triebwerksachse 6 von 0° abweichenden Staffelungswinkel 17G bzw. 17H erzeugt wird. In den Übergangsbereichen zwischen den Bereichen A und B und den mittleren Bereichen C der Stützelemente 17 bis 20 sind die Staffelungswinkel 17G und 17H gleich Null. Zwischen den Wandungen 3 und 4 und den Bereichsgrenzen zwischen den Bereichen A und B und den mittleren Bereichen C verlaufen die Staffelungswinkel bzw. spitzen Winkel 17G und 17H stetig zwischen dem maximalen Wandert und 0°, wobei die Staffelungswinkel 17G und 17H im Bereich jeder Querschnittsebene 22 der Stützelemente 17 bis 20 jeweils identisch mit dem Eintritts- und dem Austrittswinkel der Fluidströmung 10 im Bereich der Stützelemente 17 bis 20 im Nebenstromkanal 2 sind.

Bei der erfindungsgemäßen Strahltriebwerksvorrichtung wird durch die Vergrößerung der den Stützelementen nahen Strömungsquerschnitte auch eine aus einer gegenseitigen Beeinflussung jeweils zwei einander zugeordneter Stützelemente, die einen sogenannten A-Frame ausbilden, in Abhängigkeit ihres Abstandes und ihres gegenseitigen Neigungswinkels berücksichtigt und für jede Kombination dieser Parameter eine passende Ausbildung bereitgestellt, bei der die A-Frames in einem definierten Bereich gestaffelte Profile erhalten, mittels welchen ein niedrigerer Gesamtdruckverlust erzielt wird.

### Bezugszeichenliste

- 1: Strahltriebwerksvorrichtung
- 2: Nebenstromkanal
- 3: innere Wandung
- 4: äußere Wandung
- 5: Fluidstrom
- 6: Triebwerksachse
- 7: Mischer
- 8: Einlaufbereich
- 9: Bläser
- 10: Nebenstrom
- 11: Kernstrom
- 12: Triebwerkskern
- 13: Bläsernachleitschaufeln
- 14: Stütze
- 15: Bifurkation
- 16: Stützeinrichtung
- 17 bis 20: Stützelement
- 17A bis 20A: fluidstromzugewandter Bereich des Stützelementes
- 17B, 18B, 19B: fluidstromabgewandter Bereich des Stützelementes
- 17C bis 20C: Seitenwand des Stützelementes
- 17D bis 20D: Seitenwand des Stützelementes
- 17E bis 20E: spitzer Winkel
- 17F bis 20F: spitzer Winkel
- 17G, 17H: spitzer Winkel zwischen der Mittellängsebene und der Triebwerksachse
- 21: Mittellängsebene
- 22: Querschnittsebene
- A bis C: Bereich des Stützelementes
- D: Abstand zwischen zwei Stützelementen
- H: Kanalhöhe des Nebenstromkanals
- L: axiale Länge des Stützelementes

## Patentansprüche

1. Strahltriebwerksvorrichtung (1) mit einem Nebenstromkanal (2), der von einer inneren Wandung (3) und einer äußeren Wandung (4) begrenzt ist und in dem ein Fluidstrom (10) führbar ist, wobei zwischen der inneren Wandung (3) und der äußeren Wandung (4) des Nebenstromkanals (2) eine Stützeinrichtung (16) vorgesehen ist, die einenends mit der inneren Wandung (3) und anderenends mit der äußeren Wandung (4) verbundene strebenartige Stützelemente (17 bis 20) umfasst, die jeweils zwischen einer zwischen einem in Bezug auf eine Richtung des Fluidstromes (10) im Nebenstromkanal (2) zugewandten Bereich (17A bis 20A) und einem in Bezug auf die Richtung des Fluidstromes(10) abgewandten Bereich (17B, 18B, 19B) eines Stützelementes (17 bis 20) verlaufenden ersten Seitenfläche (17C bis 20C) und der äußeren Wandung (4) und zwischen einer zwischen dem der Fluidströmung (10) im Nebenstromkanal (2) zugewandten Bereich (17A bis 20A) und dem der Fluidströmung (10) abgewandten Bereich (17B, 28B, 19B) eines Stützelementes (17 bis 20) verlaufenden zweiten Seitenfläche (17D bis 20D) und der inneren Wandung (3) einen spitzen Winkel (17E bis 20E und 17F bis 20F) einschließen und die jeweils in Bezug auf deren Mittellängsebene (21) mit einer entlang der Mittellängsebene (21) definierten Dickenverteilung ausgeführt sind, **dadurch gekennzeichnet, dass** die Mittellängsebenen (21) der Stützelemente (17 bis 20) in der inneren Wandung (3) zugewandten Bereichen (B) der Stützelemente (17 bis 20) mit einer Triebwerksachse (6) einen positiven spitzen Winkel (17G)und in der äußeren Wandung (4) zugewandten Bereichen (A) der Stützelemente (17 bis 20) mit der Triebwerksachse (6) einen negativen spitzen Winkel (17H) einschließen und sich Strömungsquerschnitte jeweils im Bereich zwischen den jeweils einen spitzen Winkel (17E bis 20E und 17F bis 20F) mit den Wandungen (3, 4) einschließenden Seitenflächen (17C bis 20C und 17D bis 20D) ausgehend von den der Fluidströmung (10) zugewandten Bereichen (17A bis 20A) in Richtung der zu der Fluidströmung (10) abgewandten Bereiche (17B, 18B, 19B) der Stützelemente (17 bis 20) vergrößern.

2. Strahltriebwerksvorrichtung nach Anspruch 1, **dadurch gekennzeichnet, dass** Beträge der spitzen Winkel (17G, 17H) zwischen der Mittellängsebene (21) eines Stützelementes (17 bis 20) und der Triebwerksachse (6) in Abhängigkeit von Beträgen der spitzen Winkel (17E bis 20E und 17F bis 20F) zwischen den Seitenflächen (17C bis 20C und 17D bis 20D) des Stützelementes (17 bis 20) und den Wandungen (3, 4) variieren.

3. Strahltriebwerksvorrichtung nach Anspruch 2, **dadurch gekennzeichnet, dass** die Beträge der spitzen Winkel (17G, 17H) zwischen der Mittellängsebene (21) eines Stützelementes (17 bis 20) und der Triebwerksachse (6) mit sinkenden Beträgen der spitzen Winkel (17E bis 20E und 17F bis 20F) zwischen den Seitenflächen (17C bis 20C und 17D bis 20D) und den Wandungen (3, 4) ansteigen.

4. Strahltriebwerksvorrichtung nach einem der Ansprüche 1 bis 3, **dadurch gekennzeichnet, dass** die Mittellängsebenen (21) der Stützelemente (17 bis 20) jeweils in einem mittleren Bereich (C) der Stützelemente (17 bis 20) zwischen den den Wandungen (3, 4) zugewandten Bereichen (A und B) parallel zur Triebwerksachse (6) ausgerichtet sind.

5. Strahltriebwerksvorrichtung nach einem der Ansprüche 1 bis 4, **dadurch gekennzeichnet, dass** die Beträge der spitzen Winkel (17G, 17H) zwischen den Mittellängsebenen (21) der Stützelemente (17 bis 20) und der Triebwerksachse (6) in den Verbindungsbereichen mit den Wandungen (3, 4) ihre Maxima aufweisen.

6. Strahltriebwerksvorrichtung nach Anspruch 5, **dadurch gekennzeichnet, dass** die Beträge der spitzen Winkel (17G, 17H) zwischen den Mittellängsebenen (21) der Stützelemente (17 bis 20) und der Triebwerksachse (6) ausgehend von den Verbindungsbereichen mit den Wandungen (3, 4) in Richtung der mittleren Bereiche (C) stetig abnehmen.

7. Strahltriebwerksvorrichtung nach Anspruch 5 oder 6, **dadurch gekennzeichnet, dass** die Beträge der spitzen Winkel (17G) zwischen den Mittellängsebenen (21) der Stützelemente (17 bis 20) und der Triebwerksachse (6) ausgehend von den Verbindungsbereichen mit der inneren Wandung (3) in Richtung der mittleren Bereiche (C) Werte zwischen maximal 10° und 0° aufweisen.

8. Strahltriebwerksvorrichtung nach einem der Ansprüche 5 bis 7, **dadurch gekennzeichnet, dass** die Beträge der spitzen Winkel (17H) zwischen den Mittellängsebenen (21) der Stützelemente (17 bis 20) und der Triebwerksachse (6) ausgehend von den Verbindungsbereichen mit der äußeren Wandung (4) in Richtung der mittleren Bereiche (C) Werte zwischen maximal 15° und 0° aufweisen.

9. Strahltriebwerksvorrichtung nach einem der Ansprüche 1 bis 8, **dadurch gekennzeichnet, dass** sich die den Wandungen (3, 4) zugewandten Bereiche (A, B) der Stützelemente (17 bis 20), deren Mittellängsebenen (21) mit der Triebwerksachse(6) einen spitzen Winkel (17G, 17H) einschließen, jeweils ausgehend von den Anbindungsbereichen der Stützelemente (17 bis 20) an den Wandungen (3, 4) mindestens bis auf 10 % und maximal bis auf 30 % einer Kanalhöhe (H) des Nebenstromkanals (17) erstrecken.

10. Strahltriebwerksvorrichtung nach einem der Ansprüche 1 bis 9, **dadurch gekennzeichnet, dass** jeweils zwei Stützelemente (17, 18 und 19, 20) in einer eine A-Anordnung bildenden Art und Weise mit der inneren Wandung (3) und der äußeren Wandung (4) verbunden sind.

11. Strahltriebwerksvorrichtung nach Anspruch 10, **dadurch gekennzeichnet, dass** die Beträge der spitzen Winkel (17F, 18F bzw. 19F, 20F) zwischen den Seitenflächen (17D, 18D bzw. 19D, 20D) der Stützelemente (17 bis 20) und der inneren Wandung (3) und die Beträge der spitzen Winkel (17E, 18E bzw. 19E, 20E) zwischen den Seitenflächen (17C, 18C bzw. 19C, 20C) der Stützelemente (17 bis 20) und der äußeren Wandung (4) gleich groß sind.

12. Strahltriebwerksvorrichtung nach Anspruch 10 oder 11, **dadurch gekennzeichnet, dass** die Beträge der spitzen Winkel (17G, 17H) zwischen den Mittellängsebenen (21) der Stützelemente (17 bis 20) und der Triebwerksachse (6) gleich groß sind.

13. Strahltriebwerksvorrichtung nach einem der Ansprüche 1 bis 12, **dadurch gekennzeichnet, dass** die Stützelemente (17 bis 20) jeweils in einer senkrecht zu Mittellängsebene (21) stehenden Querschnittebene (22) einen elliptischen Querschnitt aufweisen.
